# EUROPÄISCHE PATENTSCHRIFT

(11) **EP 0 797 288 B1**
(45) Veröffentlichungstag und Bekanntmachung des Hinweises auf die Patenterteilung: **25.06.2003**
(21) Anmeldenummer: 97104046.4
(22) Anmeldetag: 11.03.1997
(51) Int. Cl.: H02M 1/12, H02M 3/335

(54) **Schaltnetzteil mit verringerter Oberwellenbelastung des Netzes**
Switching power supply with reduced harmonic network load
Alimentation à découpage avec charge harmonique du réseau diminuée

(30) Priorität: 19.03.1996 DE 19610762
(43) Veröffentlichungstag der Anmeldung: 24.09.1997
(73) Patentinhaber: DEUTSCHE THOMSON-BRANDT GMBH, 78048 Villingen-Schwenningen (DE)
(72) Erfinder: Louvel, Jean-Paul, 78050 Villingen-Schwenningen (DE); Koegel, Reinhard, 78086 Brigachtal (DE)

(56) Entgegenhaltungen:
- EP-A- 0 653 831
- EP-A- 0 700 145
- DE-A- 4 008 652
- US-A- 5 390 099

## Beschreibung

Die Erfindung geht aus von einem Schaltnetzteil mit verringerter Oberwellenbelastung des Netzes gemäß dem Oberbegriff des Anspruchs 1. Ein derartiges Schaltnetzteil ist bekannt durch die DE-OS 44 31 120. Dieses Schaltnetzteil ermöglicht mit einer relativ einfachen Schaltung eine nennenswerte und wirkungsvolle Verbesserung des sogenannten Powerfaktors, also eine Verringerung der dem Netz entnommenen Oberwellen.

Es hat sich gezeigt, daß im Augenblick der Sperrung des Schalttransistors durch die Drossel aufgrund der Abschaltung des Stromes ein hoher Spannungsimpuls induziert wird, der über die Arbeitswicklung des Trenntransformators auf den Kollektor des Schalttransistors gelangt. Dieser unerwünschte Spannungsimpuls wird auch durch die Kopplung des Trenntransformators nicht verringert, weil die Drossel auf einem vom Trenntransformator getrennten Kern angeordnet und somit mit dem Trenntransformator nicht verkoppelt ist. Dieser hohe Spannungsimpuls bewirkt einerseits eine Gefährdung des Schalttransistors und andererseits eine unerwünschte Störstrahlung. Gegebenenfalls muß wegen dieses Spannungsimpulses ein teurerer Schalttransistor mit einer höheren Spannungsfestigkeit eingesetzt werden. Das Problem der Störstrahlung bleibt dabei aber bestehen.

Aus der EP-A-0 653 831 ist ein Schaltnetzteil mit verringerter Oberwellenbelastung des Netzes bekannt, bei dem eine Reihenschaltung mit einer ersten Drossel und einer Diode direkt am Schalttransistor angeschlossen ist. Hierdurch ist eine Verzweigung mit einer zweiten Drossel und einer Diode notwendig, über die ein Teil des Stromes der ersten Drossel abgeleitet wird.

Der Erfindung liegt die Aufgabe zugrunde, ein Schaltnetzteil der beschriebenen Art mit einfachen Schaltungsmitteln so weiterzubilden, daß die Amplitude des Spannungsimpulses und damit die durch ihn verursachte Störstrahlung verringert wird und für dem Schalttransistor kein Transistor mit einer erhöhten Spannungsfestigkeit erforderlich ist.

Diese Aufgabe wird durch die im Anspruch 1 angegebene Erfindung gelöst. Vorteilhafte Weiterbildungen der Erfindung sind in den Unteransprüchen angegeben.

Durch die erfindungsgemäße Maßnahme wird die Spannungsbelastung des Schalttransistors durch den an der Drossel induzierten Impuls im Abschaltaugenblick des Schalttransistors beträchtlich verringert. Der Schalttransistor ist dann nicht mehr gefährdet, und es muß kein Schalttransistor mit einer erhöhten Spannungsfestigkeit eingesetzt werden. Die Wirkung der Schaltung zur Erhöhung des Powerfaktors, d.h. zur Reduzierung der Oberwellenbelastung des Netzes, wird indessen durch die erfindungsgemäße Maßnahme nicht beeinträchtigt. Die Schaltungsmaßnahme ist auch relativ einfach und benötigt nur eine preiswerte handelsübliche Diode und keine Spezialdiode.

Vorzugsweise ist die zweite Diode an das an den Ladekondensator angeschlossene Ende der Arbeitswicklung des Trenntransformators angeschlossen. Dann wird die Impulsspannung an dem genannten Verbindungspunkt auf die Gleichspannung an dem Ende der Arbeitswicklung begrenzt, deren Wert für den Transistor ungefährlich ist. Dabei ist vorzugsweise das Ende der Arbeitswicklung an einen gegenüber dem Ladekondensator großen Speicherkondensator und über ein Entkopplungselement an den Ladekondensator angeschlossen. Das Entkopplungselement ist dabei vorzugsweise durch eine Diode gebildet.

Die zweite Diode kann auch an einen beliebigen Punkt fester Spannung angeschlossen sein. Die Spannung muß dabei so groß sein, daß die Diode die übrige Wirkung der Schaltung insbesondere während der leitenden Phase des Schalttransistors nicht beeinflußt und dennoch eine Begrenzung auf einen genügend niedrigen Wert bewirkt.

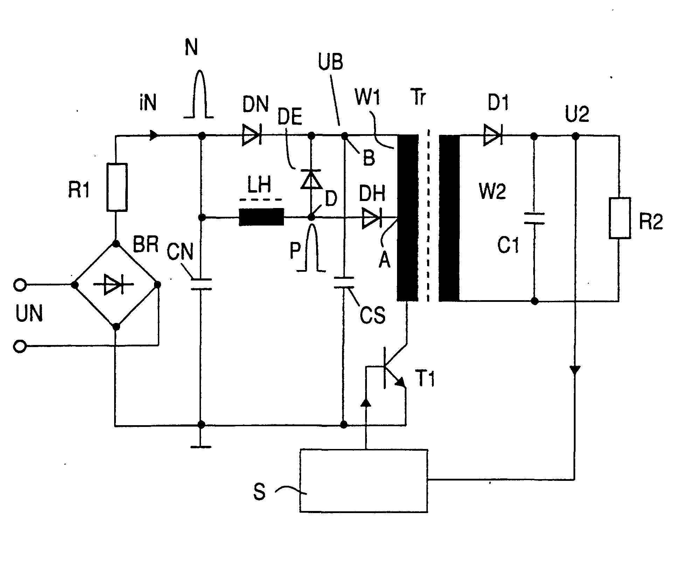

Die Erfindung wird im folgenden anhand der Zeichnung erläutert. Darin zeigt die einzige Figur die genannte bekannte Schaltung mit der erfindungsgemäßen Lösung.

Die Figur zeigt den Aufbau eines Schaltnetzteils. Dargestellt sind die Netzspannung UN, der Netzgleichrichter BR, der Strombegrenzungswiderstand R1, der Ladekondensator CN, der Trenntransformator Tr mit der Arbeitswicklung W1 und der Sekundärwicklung W2, der Schalttransistor T1, die Diode D1 zur Erzeugung der Betriebsspannung U2 an dem Siebkondensator C1 für die Last R2 und die von der Sekundärseite gespeiste Steuerschaltung S, die den Schalttransistor T1 im Sinne einer Stabilisierung der Betriebsspannung U2 steuert. Der Ladekondensator CN und der Speicherkondensator CS sind durch die Entkopplungsdiode DN voneinander entkoppelt. Außerdem ist zwischen dem Ladekondensator CN und dem Abgriff A der Arbeitswicklung W1 die Reihenschaltung aus der Drossel LH und der Diode DH eingefügt.

Die Spannung an dem Ladekondensator CN ist durch einen entsprechend kleinen Ladekondensator CN eine pulsierende Sinusspannung, die jedoch im Bereich der Nulldurchgänge von UN nicht auf null abfällt, sondern dort einen konstanten Wert hat. Die Spannung UB an dem gegenüber dem Ladekondensator CN großen Speicherkondensator CS ist eine gesiebte Gleichspannung, die während einer Halbperiode praktisch nicht abfällt. Die Diode DN bildet einen ersten Ladeweg für CS, der alleine aber einen unerwünschten oberwellenhaltigen Strom erzeugen würde. Die Reihenschaltung aus LH und DH bildet jetzt einen zweiten Ladeweg für CS. Durch besondere Wahl des Wertes von LH und der Lage des Abgriffs A fließt im Bereich des Maximums von UN ein zusätzlicher Ladestrom in CS. Dieser Ladestrom hat eine längere Dauer und eine geringere Amplitude als der Ladestrom über DN, so daß der dem Netz entnommene Strom einen wesentlich geringeren Oberwellenanteil hat und der idealen Sinusform besser angenähert wird. Bei der soweit beschriebenen Schaltung wird im Abschaltaugenblick des Schalttransistors T1 durch die Drossel LH an dem Punkt D ein positiver Spannungsimpuls P erzeugt, der den Schalttransistor T1 gefährdet und eine unerwünschte Störstrahlung bewirkt.

Zusätzlich ist jetzt der Punkt D über die Diode DE mit dem Punkt B, also dem Speicherkondensator CS verbunden. Dadurch wird erreicht, daß der Spannungsimpuls P am Punkt D den Wert der Spannung am Punkt B nicht überschreiten kann, abgesehen von der geringen Flußspannung von etwa 0,7 Volt der Diode DE. Das bedeutet, daß der Spannungsimpuls P am Punkt D auf den Wert der Spannung UB am Punkt B begrenzt wird. Diese Spannung UB ist indessen für den Transistor T1 nicht gefährlich und erzeugt auch keine unzulässig hohe Störstrahlung.

Die Diode DE kann auch zwischen dem Punkt D und einem anderen Punkt fester Spannung geschaltet sein, die etwa in der Größenordnung der Spannung UB liegt.

## Patentansprüche

1. Schaltnetzteil mit verringerter Oberwellenbelastung des Netzes, bei dem der Ausgang des Netzgleichrichters (BR) an einen Ladekondensator (CN) und an die Reihenschaltung eines Entkopplungselements (DN), der Arbeitswicklung (W1) eines Transformators (Tr) und eines Schalttransistors (T1) angeschlossen ist, und der Ladekondensator (CN) über die Reihenschaltung einer Drossel (LH) und einer Diode (DH) mit einem Abgriff (A) der Arbeitswicklung (W1) verbunden ist, und wobei ein gegenüber dem Ladekondensator (CN) großer Speicherkondensator (CS) an das mit dem Entkopplungselement (DN) verbundene Ende (B) der Arbeitswicklung (W1) angeschlossen ist, **dadurch gekennzeichnet, daß** ein zwischen der Drossel (LH) und der Diode (DH) liegender Verbindungspunkt (D) über eine zweite Diode (DE) an einen Punkt (B) fester Spannung angeschlossen ist derart, daß an der Drossel (LH) im Abschaltsaugenblick des Schalttransistors (T1) induzierte Impuls auf einen genügend niedrigen Wert induziert wird und die Diode (DE) die übrige Wirkung der Schaltung insbesondere während der leitenden Phase des Schalttransistors (T1) nicht beeinflußt.

2. Schaltung nach Anspruch 1, **dadurch gekennzeichnet, daß** die zweite Diode (DE) an das an den Speicherkondensator (CS) angeschlossene Ende (B) der Arbeitswicklung (W1) angeschlossen ist.

3. Schaltung nach Anspruch 1 oder 2, **dadurch gekennzeichnet, daß** das Entkopplungselement (DN) durch eine Diode gebildet ist.

## Claims

1. Switched-mode power supply having a reduced harmonic load on the mains wherein the output of the mains rectifier (BR) is connected to a charge capacitor (CN) and to a series circuit formed by a decoupling element (DN), an operating winding (W1) of a transformer (Tr) and of a switching transistor (T1) and wherein the charge capacitor (CN) is connected via the series circuit of an inductor (LH) and a diode (DH) to a tap (A) of the operating winding (W1) and wherein a storage capacitor (CS) having a high value compared with the charge capacitor(CN) is connected to the end (B) of the operating winding (W1) connected to the decoupling element (DN),
**characterized in that**
a connecting point (D) positioned between the inductor (LH) and the diode (DH) is connected via a second diode (DE) to a point (B) of fixed voltage in such a manner that the impulse induced at the inductor (LH) in the turn-off moment of the switching transistor (T1) is reduced to a sufficient low value, and that the second diode (DE) does not affect the function of the switched-mode power supply during the conductive phase of the switching transistor (T1).

2. Switched-mode power supply according to claim 1, **characterized in that** the second diode (DE) is connected to that end of the primary winding (W1) which is connected to the storage capacitor (CS).

3. Switched-mode power supply according to claim 1 or 2, **characterized in that** the decoupling element (DN) is formed by a diode.

## Revendications

1. Alimentation à découpage avec charge harmonique du réseau diminuée où la sortie du redresseur de réseau (BR) est connectée à un condensateur de charge (CN) et au montage en série d'un élément de découplage (DN), de l'enroulement de puissance (W1) d'un transformateur (Tr) et d'un transistor commutateur (T1), où le condensateur de charge (CN) est connecté via le montage en série d'une bobine d'inductance (LH) et d'une diode (DH) à un branchement (A) de l'enroulement de puissance (W1) et où un gros condensateur de mémoire (CS) faisant face au condensateur de charge (CN) est connecté à l'extrémité (B) de l'enroulement de puissance (W1) raccordée à l'élément de découplage (DN), **caractérisée en ce qu'**un point de connexion (D) placé entre la bobine d'inductance (LH) et la diode (DH) est connecté via une deuxième diode (DE) à un point (B) de tension stable de sorte que l'impulsion induite lors de la déconnexion du transistor commutateur (T1) au niveau de la bobine d'inductance (LH) soit réduite à une valeur suffisamment basse et que la deuxième diode (DE) n'influence pas fortement la fonction de l'alimentation à découpage pendant la phase conductrice du transistor commutateur (T1).

2. Alimentation à découpage selon la revendication 1, **caractérisée en ce que** la deuxième diode (DE) est connectée à l'extrémité (B) de l'enroulement de puissance (W1) connectée au condensateur de mémoire (CS).

3. Alimentation à découpage selon la revendication 1 ou 2, **caractérisée en ce que** l'élément de découplage (DN) est formé d'une diode.
